# EUROPÄISCHE PATENTANMELDUNG

(11) **EP 1 988 452 A1**
(43) Veröffentlichungstag der Anmeldung: **05.11.2008**
(21) Anmeldenummer: 08001837.7
(22) Anmeldetag: 31.01.2008
(51) Int. Cl.: G06F 9/44

(54) **Computersystem und Verfahren zum Erzeugen und Editieren eines in einem Mikrocontroller ausführbaren Programmcodes**

(30) Priorität: 18.04.2007 DE 102007018331
(71) Anmelder: Viessmann Werke GmbH & Co. KG, 35107 Allendorf (DE)
(72) Erfinder: Clemens, Arno, Rennertehausen (DE); Hesse, Wolfgang, 59969 Hallenberg (DE)
(74) Vertreter: Beetz & Partner

(57) **Zusammenfassung**

Computersystem mit einer graphischen Benutzerschnittstelle (10), die eine Displayeinheit (12) umfasst, und mit einer Datenverarbeitungseinheit (16) zum Erzeugen und Editieren eines in wenigstens einem Mikrocontroller (18) ausführbaren Programmcodes zur Ablaufsteuerung eines von dem Mikrocontroller (18) gesteuerten Systems. Es wird vorgeschlagen, dass die Datenverarbeitungseinheit (16) dazu vorgesehen ist, auf der Displayeinheit (12) eine graphische Darstellung (26) der in dem Programmcode codierten Ablaufsteuerung zu generieren, in welcher Zustände des Systems durch Zustandssymbole (28) dargestellt sind und in welcher Übergänge zwischen zwei Zuständen des Systems durch Übergangssymbole (30) dargestellt sind, welche die beiden an dem Übergang beteiligten Zustände verbinden.

## Beschreibung

Die Erfindung betrifft ein Computersystem mit einer graphischen Benutzerschnittstelle und mit einer Datenverarbeitungseinheit zum Erzeugen und Editieren eines in wenigstens einem Mikrocontroller ausführbaren Programmcodes zur Ablaufsteuerung eines von dem Mikrocontroller gesteuerten Systems und ein Verfahren zum computergestützten Erzeugen und Editieren eines solchen Programmcodes zur Ablaufsteuerung eines von dem Mikrocontroller gesteuerten Systems und ein Verfahren zum computergestützten Erzeugen und Editieren eines solchen Programmcodes.

Aus dem Stand der Technik sind speicherprogrammierbare Steuerungen mit Mikrocontrollern bekannt, die vorwiegend als Prozesssteuerungen eingesetzt werden. Im Bereich der eingebetteten Systeme, in denen ein Mikrocontroller bzw. Rechnersystem weitgehend unsichtbar den Dienst eines Geräts versieht, wird dagegen meist mit starrer Programmierung gearbeitet, was bei Änderung der Ablaufsteuerung eine erneute Kompilierung des geänderten Programms erfordert.

Speicherprogrammierbare Steuerungen müssen in der Regel mit einer industriellen steuerungsprozessorientierten, komplexen Programmiersprache programmiert werden. Hier hat sich neben den aus der Relaistechnik abgeleiteten Kontaktplänen und den an digitalen Schaltungsdesign angelehnten Funktionsplänen in erster Linie die Skriptsprache nach IEC 61131-3 durchgesetzt.

Der vorliegenden Erfindung liegt die Aufgabe zugrunde, eine Programmierumgebung zum Erzeugen und Editieren eines in einem Mikrocontroller ausführbaren Programmcodes zur Ablaufsteuerung eines von dem Mikrocontroller gesteuerten Systems bereit zu stellen, der eine intuitive Programmierung bzw. eine intuitive Kontrolle der Programmierung ohne vertiefte Spezialkenntnisse ermöglicht und in welcher auch die Programmierung von eingebetteten Mikrocontrollersystemen mit einer Flexibilität verändert werden kann, die der Flexibilität einer speicherprogrammierbaren Steuerung nahe kommt.

Die Erfindung geht aus von einem Computersystem mit einer graphischen Benutzerschnittstelle, die ein Eingabemittel und eine Displayeinheit umfasst. Das Computersystem umfasst ferner eine Datenverarbeitungseinheit zum Erzeugen und Editieren eines in wenigstens einem Mikrocontroller ausführbaren Programmcodes zur Ablaufsteuerung eines von dem Mikrocontroller gesteuerten Systems.

Es wird vorgeschlagen, dass die Datenverarbeitungseinheit dazu vorgesehen ist, auf der Displayeinheit eine graphische Darstellung der in dem Programmcode kodierten Ablaufsteuerung zu generieren, in welcher Zustände des Systems durch Zustandssymbole dargestellt sind und in welcher Übergänge zwischen zwei Zuständen des Systems durch Übergangssymbole dargestellt sind. Die Übergangssymbole verbinden die beiden an dem Übergang beteiligten Zustände. An einem Übergang sind ein Anfangszustand und ein Endzustand des Übergangs beteiligt. Die Übergangssymbole verbinden zwei Zustände im obigen Sinne, wenn durch die Übergangssymbole ein optischer Zusammenhang geschaffen wird. Die Übergangssymbole können beispielsweise Linien oder Pfeile sein, die um weitere Details ergänzt werden können. Unter "vorgesehen" soll in diesem Zusammenhang auch "ausgelegt" und "ausgestattet" verstanden werden. Eine Datenverarbeitungseinheit ist insbesondere dann zur graphischen Darstellung der Ablaufsteuerung ausgelegt, wenn sie eine entsprechende Graphikkarte und einen Monitor umfasst und zudem mit einer geeigneten Software ausgestattet ist.

In einer Weiterbildung der Erfindung wird vorgeschlagen, dass die graphische Benutzerschnittstelle ein Eingabemittel umfasst, durch welches zum Verändern von Parametern eines Zustands oder eines Übergangs das dem Zustand bzw. dem Übergang zugeordnete Zustandssymbol bzw. Übergangssymbol auswählbar ist. Das Eingabemittel kann beispielsweise die Position eines Cursors auf der Displayeinheit steuern und als Maus, Trackball oder Touchpad ausgebildet sein. Eine Auswahl des entsprechenden Symbols bzw. Zustands oder Übergangs kann dann beispielsweise durch Anklicken des Symbols erfolgen.

Ferner wird vorgeschlagen, dass die Datenverarbeitungseinheit dazu vorgesehen ist, auf der Displayeinheit ein Formular zum Eingeben und/oder Ändern von Parametern eines Zustands darzustellen. Dadurch kann der Zustand in einer kontrollierten Weise konfiguriert werden und eine fehleranfällige unmittelbare Konfiguration der Zustandsparameter kann entfallen. Der Zustand kann nach außen hin gekapselt werden, so dass nur mit der Methode des Formulars auf den Zustand zugegriffen werden kann. Ein kontrollierter Zugriff des Mikrocontrollers auf Funktionen des von dem Mikrocontroller gesteuerten Systems kann gewährleistet werden, wenn die Parameter des Zustands Parameter einer Funktion des von dem Mikrocontroller gesteuerten Systems enthalten, welches das System in dem entsprechenden Zustand ausführen soll. Eine fehlerhafte Parametrierung der Systemfunktionen kann durch eine entsprechende Einschränkung der Auswahlmöglichkeiten bei der Zustandsparametrierung verhindert werden.

Ferner wird vorgeschlagen, dass die Datenverarbeitungseinheit dazu vorgesehen ist, auf der Displayeinheit ein Formular zum Eingeben und/oder Ändern von Parametern eines Übergangs darzustellen. Dadurch kann der Zugriff auf die Parameter des Übergangs reguliert werden und eine fehleranfällige manuelle Manipulation der Parameter des Übergangs kann verhindert werden.

Die Parameter bzw. Eigenschaften eines Zustands können in einer besonders übersichtlichen Weise in einem dem entsprechenden Zustandssymbol zugeordneten Zustandsparameterfeld dargestellt werden. Eine unübersichtliche Fülle von Parametern verschiedener Zustände kann vermieden werden, wenn die Datenverarbeitungseinheit dazu vorgesehen ist, das Zustandsparameterfeld nur dann darzustellen, wenn das entsprechende Zustandssymbol ausgewählt ist.

Analog zu den Vorteilen des Zustandsparameterfelds kann eine bessere Übersichtlichkeit gewährleistet werden, wenn die Datenverarbeitungseinheit dazu vorgesehen ist, Parameter des Übergangs in einem dem entsprechenden Übergangssymbol zugeordneten Übergangsparameterfeld dazustellen, das insbesondere nur dann dargestellt werden muss, wenn das entsprechende Übergangssymbol ausgewählt ist. Die Auswahl kann beispielsweise durch Anklicken des Übergangssymbols oder durch Positionieren des Cursors im Bereich des Übergangssymbols erfolgen. Ferner wird vorgeschlagen, dass die Zustandssymbole und/oder Übergangssymbole mit Hilfe des Eingabemittels verschoben werden können, beispielsweise durch Drag-and-Drop.

Wenn die Datenverarbeitungseinheit in der graphischen Darstellung der in dem von dem Programmcode kodierten Ablaufsteuerung einer Gruppe von Zuständen des Systems durch ein Gruppensymbol dargestellt werden kann, kann die Übersichtlichkeit weiter verbessert werden.

Eine Übertragung des Programmcodes auf den Mikrocontroller bzw. ein Einlesen des Programmcodes vom Mikrocontroller kann durch eine entsprechende Schnittstelle vereinfacht werden. Die Programmierung bzw. Umprogrammierung während der Laufzeit des Systems kann dadurch ermöglicht werden.

Eine Anpassung des Programmcodes oder der gleichzeitig erzeugten Parameterdaten an eine Bauart des Mikrocontrollers und/oder die anwendungsbezogene Signalbeschaltung kann durch ein Eingabemittel zum Eingeben verschiedener Konfigurationsinformationen zu den verschiedenen Eingabesignalen und Ausgabesignalen des Mikrocontrollers ermöglicht bzw. vereinfacht werden.

Wenn das Computersystem ein Simulationsmittel zum Simulieren der in dem Programmcode implementierten Ablaufsteuerung umfasst, kann der Programmcode in einer einfachen Weise vor seiner Implementierung im Mikrocontroller getestet werden.

Ferner wird vorgeschlagen, dass die Datenverarbeitungseinheit automatisch eine Dokumentationsdatei des ausführbaren Programmcodes generiert. Die Dokumentationsdatei kann beispielsweise die graphische Darstellung der Ablaufsteuerung und einer Erklärung der verschiedenen Zustände und ihrer Parameter umfassen.

Wenn die Datenverarbeitungseinheit dazu ausgelegt ist, in zwei parallel arbeitenden Mikrocontrollern ausführbare Programmcodes zu erzeugen, wobei die Mikrocontroller den Programmcode parallel abarbeiten und die Parameter der Zustände verglichen werden, kann eine transparente Softwareentwicklung erreicht werden, die auch im Zusammenhang mit einer für hohe Sicherheitsanforderungen notwendigen redundanten Programmierung eine hohe Transparenz gewährleistet.

Ferner betrifft die Erfindung ein Verfahren zum computergestützten Erzeugen und Editieren eines in einem Mikrocontroller ausführbaren Programmcodes zur Ablaufsteuerung eines von dem Mikrocontroller gesteuerten Systems.

Um eine flexible, intuitive und übersichtliche Programmierung zu ermöglichen, wird vorgeschlagen, dass auf einer Displayeinheit eines Computersystems eine graphische Darstellung der in dem Programmcode codierten Ablaufsteuerung generiert wird. In der graphischen Darstellung sind Zustände des Systems durch Zustandssymbole dargestellt und Übergänge zwischen zwei Zuständen des Systems durch Übergangssymbole dargestellt, welche die beiden an dem Übergang beteiligten Zustände verbinden.

Weitere Merkmale und Vorteile ergeben sich aus der nachfolgenden Zeichnungsbeschreibung. Die Beschreibung, die Figuren und die Ansprüche enthalten zahlreiche Merkmale in Kombination, die der Fachmann sinnvollerweise auch einzeln betrachten und zu weiteren Kombinationen zusammenfassen wird.

Es zeigen:
- Figur 1: ein Computersystem mit einem Mikrocontroller zur Ablaufsteuerung eines Systems,
- Figur 2: eine auf einer Displayeinheit des Computersystems generierte grafische Darstellung der in dem Programmcode codierten Ablaufsteuerung, die auf der Darstellung der Ablaufsteuerung als Moore-Automat basiert,
- Figur 3: ein Aktionsfester zur Eingabe von Parametern eines Zustands des Systems und
- Figur 4: ein Dialogfenster zum Editieren von Übergangsbedingungen für einen Übergang von einem Zustand zu einem Folgezustand.

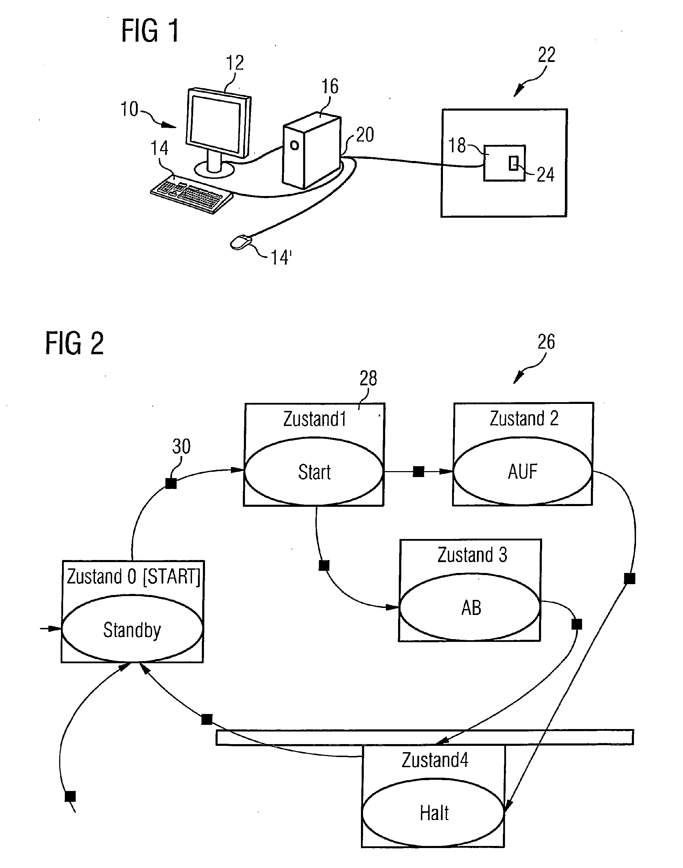

Figur 1 zeigt ein Computersystem mit einer Benutzerschnittstelle 10, die eine Displayeinheit 12, ein erstes, als Tastatur ausgebildetes Eingabemittel 14 und ein zweites, als Maus ausgebildetes Eingabemittel 14' umfasst. Das Computersystem hat zudem eine als Personal Computer ausgebildete Datenverarbeitungseinheit 16, in der als Software eine Programmierumgebung zum Erzeugen und Editieren eines in einem Mikrocontroller 18 ausführbaren Programmcodes zur Ablaufsteuerung eines von dem Mikrocontroller 18 gesteuerten Systems implementiert ist. Das Computersystem kommuniziert über eine Schnittstelle 20 mit einem Mikrocontroller 18 und kann über die Schnittstelle 20 bzw. ein an der Schnittstelle 20 angeschlossenes Datenkabel den von der Datenverarbeitungseinheit 16 erzeugten Programmcode auf den Mikrocontroller 18 übertragen und einen auf dem Mikrocontroller 18 gespeicherten Programmcode einlesen.

Im vorliegenden Beispiel ist der Mikrocontroller 18 zur Steuerung eines Feuerungsautomaten 22 ausgelegt und der Programmcode der durch das Computersystem flexibel anpassbaren Ablaufsteuerung ist in einem separaten Speicherbereich 24 des Mikrocontrollers 18 abgelegt, der unabhängig von einer Sicherheitsbasissoftware des Mikrocontrollers 18 veränderbar ist. Dieser Speicherbereich 24 kann zum Beispiel ein internes EEPROM oder ein abgegrenzter ROM-Bereich sein. Die Ablaufsteuerung stellt das Programm des Feuerungsautomaten 22 dar, das zur Laufzeit des Systems eingelesen und interpretiert wird. Der Programmcode steht als Binärtabelle beiden Controllern des Systems zur Verfügung.

In dem in Figur 1 dargestellten Ausführungsbeispiel umfasst das System zwei Mikrocontroller 18, deren Programmcode von dem Computersystem generiert und verändert werden kann. Das Computersystem kann jedoch analog zum Erzeugen und Editieren einer Ablaufsteuerung eines nur einen oder mehr als zwei Mikrocontroller umfassenden Systems genutzt werden. Die in dem Computersystem implementierte Programmierumgebung unterstützt durch die Verwendung grafischer Objekte die Erstellung und Modifikation der Programmcodes für die Mikrocontroller 18 dadurch, dass die Ablaufsteuerung für den Programmierer besonders übersichtlich dargestellt wird. Dazu ist die Datenverarbeitungseinheit 16 bzw. die Programmierumgebung dazu ausgelegt, auf der Displayeinheit 12 eine grafische Darstellung 26 der in dem Programmcode codierten Ablaufsteuerung zu generieren, in welcher Zustände des Systems durch Zustandssymbole 28 dargestellt sind und in welcher Übergänge zwischen zwei Zuständen des Systems durch Übergangssymbole 30 dargestellt sind, welche die beiden an dem Übergang beteiligten Zustände verbinden. Die Zustandssymbole 28 und die Übergangssymbole 30 bzw. deren Eigenschaften sind in der Software als Eigenschaften des zugehörigen Bildschirmobjekts editierbar. Zur Laufzeit des Systems werden die Übergänge von einem Zustand in den nächsten durch eine fortlaufende Überprüfung der hierfür relevanten Signale eingeleitet. Die Entscheidungskriterien für diese Überprüfung sind als Parameter dem zugehörigen Bildschirmobjekt, d.h. dem Übergangssymbol 30, zugeordnet.

Eine derartige grafische Darstellung 26 der in dem Programmcode codierten Ablaufsteuerung ist in Figur 2 dargestellt. Die grafische Darstellung 26 ist an die aus der theoretischen Informatik bekannte Darstellung einer Finite-State-Machine (FSM) als sogenannter Moore-Automat angelehnt. Über die Eingabemittel 14, 14' der grafischen Benutzerschnittstelle 10 können die Zustandssymbole 28 und/oder Übergangssymbole 30 der grafischen Darstellung 26 ausgewählt werden. Wenn der Cursor über einem Übergangssymbol 30 oder einem Zustandssymbol 28 positioniert wird, erscheint neben dem Cursor ein Textfeld mit den wesentlichen Eigenschaften bzw. Parametern des Übergangs oder Zustands.

Wenn der Bediener den Übergang oder den Zustand durch ein Betätigen der Maustaste auswählt, erscheint ein Formular zum Eingeben und/oder Ändern von Parametern des ausgewählten Zustands oder Übergangs. Die Zustandssymbole 28 repräsentieren Zustandsobjekte der zugrundeliegenden Software, die Aktionen, die in dem jeweiligen Zustand auszuführen sind, zusammenfassen und stellen den Ausgangs- oder Zielpunkt eines Übergangs dar. Die Übergangssymbole 30 repräsentieren entsprechende Übergangsobjekte der Software.

Die Zustandsobjekte stellen mehrere Funktionen bereit, die über ein Pop-up-Menü (Klicken mit der rechten Maustaste auf das Zustandssymbol 28) aufgerufen werden können. Die Funktionen umfassen das Erzeugen eines Folgezustands und das gleichzeitige Anlegen eines Übergangs von dem ausgewählten Zustand zu dem erzeugten Folgezustand, das Erzeugen eines Übergangs zu einem bestehenden Zustand, das Wiederherstellen oder Lösen einer Gruppe von Zuständen, die durch ein hier nicht dargestelltes Gruppensymbol in der grafischen Darstellung 26 zusammengefasst sind, um die Übersichtlichkeit zu verbessern, das Öffnen eines Dialogfensters mit Aktionen und das Löschen des Zustands. Das Dialogfenster mit Aktionen bzw. das Aktionsfenster 32 dient zum Editieren der Zustandsinformationen bzw. Zustandsparameter.

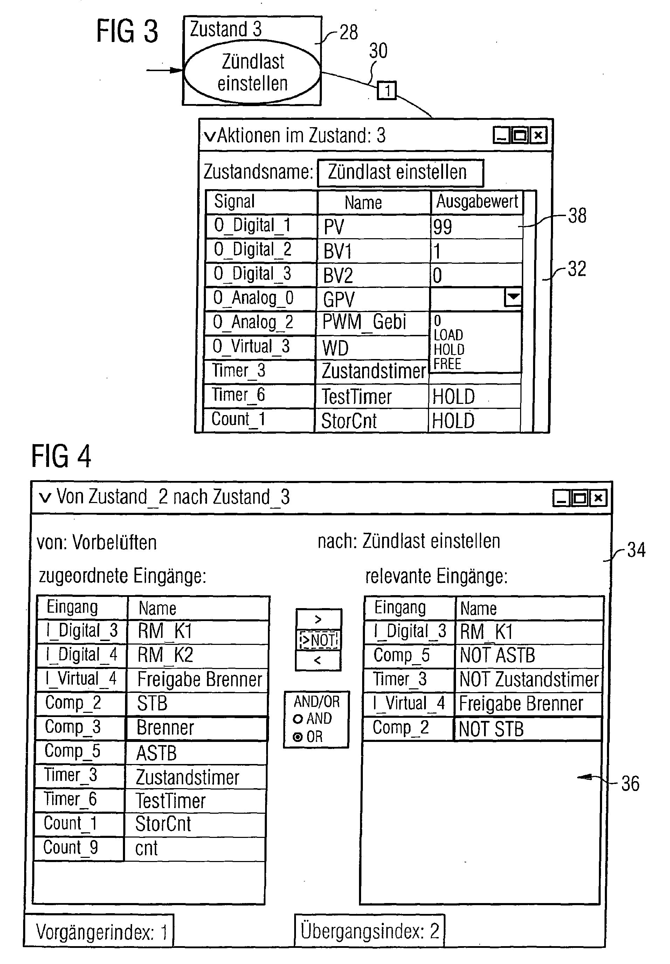

Figur 3 zeigt ein Aktionsfenster 32 zu einem Zustand, in dem in einer linken Spalte die für den Zustand relevanten Ein- und Ausgänge des zu steuernden Mikrocontrollers 18 und die verfügbaren Funktionen des von dem Mikrocontroller 18 gesteuerten Systems bzw. des Mikrocontrollers 18 angegeben sind. In einer mittleren Spalte des Zustandsfensters ist der Name der Funktion bzw. des Ausgangs angegeben und in der rechten Spalte ist ein Ausgabewert, der über den entsprechenden Ausgang ausgegeben werden soll bzw. ein Argument der entsprechenden Funktion angegeben. Die Spalten bilden damit zusammen ein Zustandsparameterfeld 38, welches alle Relevanten Parameter des entsprechenden Zustands in einer übersichtlichen Form darstellt. Die Ausgabewerte bzw. Funktionen können über Auswahllisten eingestellt bzw. verändert werden. Funktionen, die typischerweise über das Zustandsfenster gesteuert werden können, sind beispielsweise Timer und Zähler. Ferner kann in einem Textfeld des Zustandsfensters ein Name des Zustands eingegeben werden.

Übergänge werden in der grafischen Darstellung 26 als Verbindungslinien zwischen den Ursprungs- und Zielzuständen dargestellt. Diese Linien führen über ein kleines Quadrat, dessen Position der Verlauf der Linie beeinflusst, die mit der Maus veränderbar (drag-and-drop). Ferner ist die Position der Zustandssymbole 28 mit der Maus veränderbar.

Ein Übergang kennt nur drei Funktionen, die über ein Pop-Up-Menü ausgewählt werden können. Eine erste Funktion öffnet ein Dialogfenster 34 (Figur 4) zum Editieren der Übergangsbedingungen, eine zweite Funktion verbindet den Übergang mit einem neuen Zielzustand und eine dritte Funktion löscht den Übergang. Beim Löschen des Übergangs werden alle von der Löschung betroffenen Zustands- und Übergangsobjekte automatisch aktualisiert.

Figur 4 zeigt das Dialogfenster 34 zum Editieren der Übergangsbedingungen. Dieses Dialogfenster 34 zeigt zwei Tabellen. Die linke Tabelle enthält alle Schlüsselnamen der an der Steuerung beteiligten Signale und ihre Funktionen in der Anwendung, die rechte Tabelle enthält die für die Übergangsbedingung relevanten, selektierten Signale. Die Tabellen bilden damit ein Übergangsparameterfeld 36, in welchem alle relevanten Parameter des Übergangs in einer übersichtlichen Weise dargestellt sind.

Mit Buttons in der Mitte des Dialogfensters 34 können einzelne Signale ausgewählt werden, sowie die Verknüpfungsart (und/oder) festgelegt werden. Die ausgewählten Kriterien werden in der graphischen Darstellung 26 der Ablaufsteuerung beim Überfahren des Übergangssymbols 30 mit der Maus als Tooltip dargestellt.

Da bei einer großen Anzahl von Zuständen und Übergängen der Bildschirminhalt sehr schnell unübersichtlich werden kann, bietet das Programm die Möglichkeit, Zustände, die vorzugsweise in ihrer Funktion eine Beziehung zueinander haben sollten, in einer Gruppendarstellung zusammenzufassen. Dies hat keine Auswirkung auf die Zustandsdaten, sondern nur auf ihre graphische Darstellung 26. Das Anlegen einer Gruppe erfolgt durch Auswahl des entsprechenden Menüeintrags in einem sich durch Rechtsklick mit der Maus in einen freien Bereich der Arbeitsfläche öffnenden Pop-up-Menü. Daraufhin wird ein Eingabefenster angezeigt, in dem die zu gruppierenden Zustände eingetragen werden können. Die so erzeugten Gruppenobjekte werden als Gruppensymbole, beispielsweise als rechteckige Rahmen dargestellt, wobei das Gruppenobjekt den Namen der Gruppe enthalten kann.

Ein Gruppenobjekt kennt drei Funktionen, die aber über ein Pop-up-Menü mit der rechten Maustaste auf das Gruppenobjekt ausgewählt werden können.

Eine erste Funktion zeigt die Gruppenmitglieder an, die zu dieser Gruppe gehören. Um sie als Gruppe zu kennzeichnen, sind die einzelnen Zustände in rot dargestellt. Über die entsprechenden Zustandsfunktionen kann die Darstellung 26 wieder in die Gruppendarstellung überführt werden oder die Gruppe kann wieder in Einzelzustände aufgelöst werden. Eine zweite Funktion öffnet ein neues Fenster, das nur die Gruppe und ihre Übergänge zu den Nachbarzuständen anzeigt. Eine dritte Funktion erzeugt ein Dialogfenster 34, in dem der Name der Gruppe editiert werden kann.

Intern erzeugt die Programmierumgebung fünf Dateitypen, und zwar Projektdateien, Parameterdateien, Konfigurationsdateien, Automatendateien und eine FSM-Tabellendatei. Die Projektdatei definiert, welche Dateien zum Projekt gehören. Außerdem enthält sie Angaben zum Projekt und Versionsindex. Die Angaben können in einem Projektfenster editiert werden und sind im lesbaren Aski-Format gespeichert. Die Parameterdatei enthält Festlegungen über die Konfiguration der Ein- und Ausgänge. Neben der Namenszuordnung der Ein- und Ausgänge ist hier festgelegt, wie die Auswertung und Ansteuerung der einzelnen Ports erfolgen soll.

Die Konfigurationsdatei enthält die Zuordnung der formalen Ein- und Ausgänge der finiten Zustandsmaschine (Finite State Machine FSM) zu deren Funktionsnamen in der Anwendung. Das Dateiformat ist ein Text, die Datei kann also auch mit einem einfachen Editor gelesen werden. Ein Verändern dieser Dateien in einem Texteditor sollte aber unterbleiben, da bei Veränderung der internen Formate ein Lesen durch die Software zu Fehlern führen kann. Die Automatendatei enthält die Beschreibung der Automatenstruktur in einem lesbaren Textformat. Die FSM-Tabellendatei enthält die dem ausführbaren Programm entsprechende FSM-Tabelle.

Mit der Auswahl eines entsprechenden Buttons oder Eintrags in einem hier nicht dargestellten Projektfenster werden fünf Ausgabedateien automatisch erzeugt und im Projektverzeichnis gespeichert. Eine erste Datei enthält die Konfiguration und FSM-Tabelle im einfachen Binärformat ohne Segmentierung oder Prüfung und entspricht dem im Mikrocontroller 18 ausführbaren Programmcode. Eine zweite Datei enthält die EEPROM-Tabelle im Intel-Hex-Format. Eine dritte Datei ist eine Headerdatei für den Hauptcontroller bzw. den ersten Mikrocontroller 18 mit Zeiger- und Längeninformationen zu den einzelnen EEPROM-Blöcken. Eine vierte Datei ist eine Headerdatei für den Überwachungscontroller bzw. den zweiten Mikrocontroller (nicht dargestellt) mit Zeiger- und Längeninformationen zu den einzelnen EEPROM-Blöcken. Eine fünfte Datei ist die EEPROM-Tabelle in einer Arraydarstellung im Headerformat.

Die intern gespeicherten Zustandsobjekte kapseln hauptsächlich die folgenden Informationen:
- Zustandsname;
- Index des Zustands mit fortlaufendem Zähler, der mit jedem neuen Zustand inkrementiert wird;
- Anzahl der Übergänge von diesem Zustand;
- Anzahl der Vorgänge;
- Array der Nachfolgerindices;
- Array der Vorgängerinformationen (Nachfolgerindex und lokaler Übergangsindex);
- Index der zugeordneten Gruppe;
- Ersatzanschlüsse, wenn gruppiert;
- Aktionen: Schlüssel, Name und Wert als frei erweiterbare Liste.

Die Übergangsobjekte enthalten im wesentlichen folgende Informationen:
- Index, der mit jedem neuen Übergang inkrementiert wird;
- Ursprungszustand, Nummer des Vorgängerzustands;
- lokaler Index des Übergangs im Ursprungszustand;
- Zielzustand, Index des Folgezustands;
- Entscheidungskriterien: Schlüssel, Wert;
- Verknüpfungstyp der Entscheidung.

Die Verknüpfung der Zustands- und Übergangsobjekte werden nicht zentral, sondern im Sinne einer verketteten Liste in den Objekten selbst verwaltet. Wenn beispielsweise ein Übergang gelöscht wird, wird in dem Zustandsobjekt des Vorgängerzustands des gelöschten Übergangs die Anzahl der Übergänge von diesem Zustand dekrementiert, das Array der Nachfolgerindices durch das Löschen des entsprechenden Zielzustands angepasst, während im Zustandsobjekt des Nachfolgezustands des gelöschten Übergangs die Anzahl der Vorgänge dekrementiert wird und das Array der Vorgängerinformationen im Sinne des nunmehr fehlenden Vorgängers angepasst wird. Wird ein Zustand gelöscht, werden automatisch alle von diesem Zustand ausgehenden bzw. zu diesem Zustand führenden Übergänge gelöscht und die Informationen der mit dem gelöschten Zustand verknüpften Zustandsobjekte aktualisiert.

## Patentansprüche

1. Computersystem mit einer graphischen Benutzerschnittstelle (10), die eine Displayeinheit (12) umfasst, und mit einer Datenverarbeitungseinheit (16) zum Erzeugen und Editieren eines in wenigstens einem Mikrocontroller (18) ausführbaren Programmcodes zur Ablaufsteuerung eines von dem Mikrocontroller (18) gesteuerten Systems, **dadurch gekennzeichnet, dass** die Datenverarbeitungseinheit (16) dazu vorgesehen ist, auf der Displayeinheit (12) eine graphische Darstellung (26) der in dem Programmcode codierten Ablaufsteuerung zu generieren, in welcher Zustände des Systems durch Zustandssymbole (28) dargestellt sind und in welcher ein Übergang zwischen zwei Zuständen des Systems durch ein Übergangssymbol (30) dargestellt ist.

2. Computersystem nach Anspruch 1, **dadurch gekennzeichnet, dass** das Übergangssymbol (30) zwei an einem Übergang beteiligte Zustände verbindet.

3. Computersystem nach Anspruch 1 oder 2, **dadurch gekennzeichnet, dass** das Übergangssymbol (30) zwischen zwei Zustandssymbolen (28) vorgesehen ist.

4. Computersystem nach zumindest einem der Ansprüche 1 bis 3, **dadurch gekennzeichnet, dass** über das Übergangsymbol (30) zwei an einem Übergang beteiligte Zustände bzw. Zustandssymbole (28) in Verbindung stehen.

5. Computersystem nach zumindest einem der vorangehenden Ansprüche, **dadurch gekennzeichnet, dass** die graphischen Benutzerschnittstelle (10) ein Eingabemittel (14, 14') umfasst, durch welches zum Verändern von Parametern eines Zustands oder eines Übergangs das dem Zustand zugeordnete Zustandssymbol (28) bzw. das dem Übergang zugeordnete Übergangssymbol (30) auswählbar ist.

6. Computersystem nach zumindest einem der vorangehenden Ansprüche, **dadurch gekennzeichnet, dass** die Datenverarbeitungseinheit (16) dazu vorgesehen ist, auf der Displayeinheit (12) ein Formular zum Eingeben und/oder Ändern von Parametern eines Zustands darzustellen.

7. Computersystem nach zumindest einem der vorangehenden Ansprüche, **dadurch gekennzeichnet, dass** die Parameter des Zustands Parameter einer Funktion des von dem Mikrocontroller (18) gesteuerten Systems enthalten, welche das System in dem Zustand ausführen soll.

8. Computersystem nach zumindest einem der vorangehenden Ansprüche, **dadurch gekennzeichnet, dass** die Datenverarbeitungseinheit (16) dazu vorgesehen ist, auf der Displayeinheit (12) ein Formular zum Eingeben und/ oder Ändern von Parametern eines Übergangs darzustellen.

9. Computersystem nach zumindest einem der vorangehenden Ansprüche, **dadurch gekennzeichnet, dass** die Datenverarbeitungseinheit (16) dazu vorgesehen ist, Parameter eines Zustands in einem dem entsprechenden Zustandssymbol (28) zugeordneten Zustandsparameterfeld (38) darzustellen.

10. Computersystem nach Anspruch 6, **dadurch gekennzeichnet, dass** Zustandsparameterfeld (38) nur dann darzustellen, wenn das entsprechende Zustandssymbol (28) ausgewählt ist.

11. Computersystem nach zumindest einem der vorangehenden Ansprüche, **dadurch gekennzeichnet, dass** die Datenverarbeitungseinheit (16) dazu vorgesehen ist, Parameter eines Übergangs in einem dem entsprechenden Übergangssymbol (30) zugeordneten Übergangsparameterfeld (36) darzustellen.

12. Computersystem nach Anspruch 11, **dadurch gekennzeichnet, dass** Übergangsparameterfeld (36) nur dann darzustellen, wenn das entsprechende Übergangssymbol (30) ausgewählt ist.

13. Computersystem nach zumindest einem der vorangehenden Ansprüche, **dadurch gekennzeichnet, dass** die Datenverarbeitungseinheit (16) dazu vorgesehen ist, in der graphische Darstellung (26) der in dem Programmcode codierten Ablaufsteuerung eine Gruppe von Zuständen des Systems durch ein Gruppensymbol darzustellen.

14. Computersystem nach zumindest einem der vorangehenden Ansprüche, **gekennzeichnet durch** eine Schnittstelle (20) zum Übertragen des Programmcodes auf den Mikrocontroller (18) und/oder zum Lesen des Programmcodes von dem Mikrocontroller (18).

15. Computersystem nach zumindest einem der vorangehenden Ansprüche, **gekennzeichnet durch** ein Eingabemittel (14, 14') zum Eingeben verschiedener Konfigurationsinformationen zu den verschiedenen Eingabesignalen und Ausgabesignalen des Mikrocontrollers (18).

16. Computersystem nach zumindest einem der vorangehenden Ansprüche, **gekennzeichnet durch** ein Simulationsmittel zum Simulieren der in dem Programmcode implementierten Ablaufsteuerung.

17. Computersystem nach zumindest einem der vorangehenden Ansprüche, **dadurch gekennzeichnet, dass** die Datenverarbeitungseinheit (16) dazu vorgesehen ist, automatisch eine Dokumentationsdatei des ausführbaren Programmcodes zu generieren.

18. Computersystem nach zumindest einem der vorangehenden Ansprüche, **dadurch gekennzeichnet, dass** die Datenverarbeitungseinheit (16) dazu ausgelegt ist, zwei in parallel arbeitenden Mikrocontrollern (18) ausführbare Programmcodes zu Erzeugen, wobei die Mikrocontroller (18) den Programmcode parallel abarbeiten und die Parameter der Zustände vergleichen.

19. Verfahren zum computergestützten Erzeugen und Editieren eines in einem Mikrocontroller (18) ausführbaren Programmcodes zur Ablaufsteuerung eines von dem Mikrocontroller (18) gesteuerten Systems, **dadurch gekennzeichnet, dass** auf einer Displayeinheit (12) eines Computers eine graphische Darstellung (26) der in dem Programmcode codierten Ablaufsteuerung generiert wird, in welcher Zustände des Systems durch Zustandssymbole (28) dargestellt sind und in welcher ein Übergang zwischen zwei Zuständen des Systems durch ein Übergangssymbole (30) dargestellt ist.

20. Verfahren nach Anspruch 19, wobei das Übergangssymbol (30) zwei an einem Übergang beteiligte Zustände verbindet.

21. Verfahren nach Anspruch 19 oder 20, wobei das Übergangssymbol (30) zwischen zwei Zustandssymbolen (28) vorgesehen ist.

22. Verfahren nach zumindest einem der Ansprüche 19 bis 21, wobei über das Übergangsymbol (30) zwei an einem Übergang beteiligte Zustände bzw. Zustandssymbole (28) in Verbindung stehen.
